# DEMANDE DE BREVET EUROPEEN

(11) **EP 1 048 586 A1**
(43) Date de publication de la demande: **02.11.2000**
(21) Numéro de dépôt: 00420060.6
(22) Date de dépôt: 30.03.2000
(51) Int. Cl.: B65D 55/02

(54) **Procédé pour la fabrication de dispositifs antivol et/ou de traçabilité associés à des moyens de bouchage et de surbouchage**

(30) Priorité: 27.04.1999 FR 9905486
(71) Demandeur: Manufacture Lyonnaise de Bouchage Société Anonyme, F-69740 Genas (FR)
(72) Inventeur: De Vaujany, M. Robert, 69740 Genas (FR)
(74) Mandataire: Bratel, Gérard

(57) **Abrégé**

L'invention concerne la fabrication industrielle à cadence élevée de dispositifs détectables à distance, pouvant servir de dispositifs antivol et/ou de supports d'information, associés à des moyens de bouchage et de surbouchage de récipients. A cet effet, on déroule et fait défiler un matériau en bande (1), et on dépose sur ce matériau au moins un moyen détectable tel que filament (4) ou film à particules orientées ou étiquette électronique, sous forme continue ou discontinue, s'étendant ou se succédant dans le sens de défilement (3) du matériau en bande (1). Ce matériau est découpé en correspondance avec le ou les moyens détectables déposés sur lui, de manière à séparer des éléments individuels, pourvus chacun d'un moyen détectable tel que filament (4) , et constituant eux-mêmes des moyens de bouchage ou de surbouchage, ou des parties de tels moyens, par exemple des joints (8) pour capsules (9).

## Description

La présente invention concerne un procédé industriel pour la fabrication à cadence élevée de dispositifs détectables à distance, servant notamment de dispositifs antivol mais aussi de dispositifs supports d'information, dits de "traçabilité", associés à des moyens de bouchage et de surbouchage de récipients tels que bouteilles, flacons, pots et autres conditionnements analogues, pour des boissons et autres produits alimentaires, des produits cosmétiques, etc...

Le problème du vol, notamment dans les magasins de vente en "libre-service", se pose de façon spécifique pour les articles de valeur relativement élevée tels que certaines boissons alcoolisées (vins, liqueurs), ou encore des produits de beauté.

D'une façon générale, la lutte contre le vol de produits dans les magasins de vente en "libre-service" est actuellement assurée, de plus en plus couramment, par l'utilisation de dispositifs détectables à distance par voie électro-magnétique ou par radiofréquence, désignés souvent comme "étiquettes électroniques", mais pouvant être constitués par de simples filaments métalliques. Ces dispositifs sont automatiquement détectés, au passage des caisses de paiement ou à la sortie du magasin, avec déclenchement d'une alarme, s'ils ne sont pas désactivés. De plus, s'il s'agit de dispositifs à "puce" électronique, pouvant mémoriser des informations variées et plus ou moins nombreuses, on obtient des étiquettes dites "intelligentes" permettant d'identifier le produit conditionné, pour attester son authenticité, assurer sa traçabilité, et fournir diverses informations relatives à ce produit, par exemple sa date de production ou sa date limite de vente, ou simplement sa référence d'identification (en remplacement d'un code-barre traditionnel).

Dans le cas particulier de récipients, tels que des bouteilles, il s'est avéré avantageux d'intégrer les étiquettes électroniques ou les filaments, à fonction antivol et/ou d'identification, dans les moyens de bouchage ou de surbouchage qui équipent de façon habituelle ces récipients. Ainsi, dans le brevet français **N° 2703659** et le brevet européen correspondant **N° 0619243,** au nom du Demandeur, il a été notamment décrit la possibilité d'appliquer un moyen détectable, formant dispositif antivol, sous une capsule de bouchage d'une bouteille, ou sur un joint en forme disque, lui-même logé sous la capsule. Au lieu d'intégrer ledit moyen détectable dans le bouchon du récipient, il est aussi envisageable de le dissimuler dans un élément de surbouchage en forme de manchon, désigné généralement comme "coiffe", et équipant de façon assez habituelle les bouteilles contenant des boissons alcoolisées (vins, mousseux...). A titre d'exemples, on peut ici se référer aussi à la demande de brevet français **N° 2754248** et à la demande de brevet internationale correspondante **N° WO 9815469,** ou à la demande de brevet européen **N° 0698561** (qui toutefois concerne une enveloppe, et non une véritable coiffe).

A l'heure actuelle, les moyens détectables, qu'il s'agisse d'étiquettes électroniques ou de simples filaments, sont de plus en plus miniaturisés, ce qui permet d'envisager leur généralisation, notamment sur des organes de bouchage même de petit diamètre. Toutefois, les procédés actuels de production de moyens de bouchage ou de surbouchage, équipés individuellement de tels moyens détectables, restent par eux-mêmes assez coûteux, et d'un faible rendement, ce qui explique que l'utilisation de ces moyens détectables soit, pour l'instant, réservée à des produits relativement coûteux, pour lesquels ils ne représentent qu'une faible part du prix total, rendant ainsi leur utilisation économiquement acceptable.

La présente invention vise à éviter ces inconvénients, en fournissant un procédé performant pour la fabrication de dispositifs antivol et analogues associés à des moyens de bouchage et de surbouchage, tels que ceux précédemment évoqués.

A cet effet, le procédé selon l'invention consiste, essentiellement, à dérouler et faire défiler dans un sens prédéterminé un matériau en bande, à déposer sur ce matériau en bande au moins un moyen détectable, tel que filament ou film à particules orientées ou étiquette électronique, sous forme continue ou discontinue, s'étendant ou se succédant dans le sens de défilement du matériau en bande, à découper ledit matériau en bande, en correspondance avec le ou les moyens détectables déposés sur lui, de manière à séparer des éléments individuels pourvus chacun d'un moyen détectable tel que filament ou film à particules orientées ou étiquette électronique, et constituant eux-mêmes des moyens de bouchage ou de surbouchage, ou des parties de tels moyens.

Ainsi, l'invention procure un procédé de fabrication "en continu", permettant une production à cadence élevée de moyens de bouchage ou de surbouchage équipés de dispositifs détectables du genre étiquette électronique ou film à particules orientées ou filament, ou analogues.

Selon un premier mode de mise en oeuvre de ce procédé, adapté à des dispositifs détectables sous forme de filaments, on déroule, simultanément au matériau en bande, au moins un filament continu qui est déposé et fixé, par exemple par collage, sur ledit matériau en bande dans le sens de défilement de celui-ci, et on découpe successivement dans ce matériau en bande des éléments qui, une fois séparés, comportent chacun un tronçon de filament.

Avantageusement, on déroule et dépose simultanément, sur le même matériau en bande en défilement, suivant des lignes parallèles, deux ou plusieurs filaments continus, et on découpe successivement dans ce matériau en bande des rangées transversales de deux ou plusieurs éléments, en correspondance avec le nombre et la position des filaments, de sorte que chacun de ces éléments comporte, une fois séparé, un tronçon de filament. Ce mode de réalisation permet notamment d'obtenir à grande cadence des joints en forme de disque pour capsules de bouchage, ces joints étant pourvus, chacun, d'un tronçon de filament disposé suivant un diamètre.

Selon une variante du procédé de l'invention, on déroule, simultanément au matériau en bande, au moins un ruban continu, de préférence un ruban adhésif, qui supporte à intervalles réguliers des dispositifs détectables séparés tels qu'étiquettes électroniques, antennes ou tronçons de filament discontinus, on dépose le ou chaque ruban sur le matériau à bande dans le sens de défilement de celui-ci, et on découpe successivement dans ce matériau en bande des éléments qui, une fois séparés, comportent chacun un dispositif détectable tel qu'étiquette électronique, antenne ou tronçon de filament.

Dans ce dernier cas, également, on déroule et dépose avantageusement sur le matériau en bande en défilement, suivant des lignes parallèles, deux ou plusieurs rubans continus qui supportent chacun, à intervalles réguliers, des dispositifs détectables séparés tels qu'étiquettes électroniques, antennes ou tronçons de filament, et on découpe successivement dans ce matériau en bande des rangées transversales de deux ou plusieurs éléments, en correspondance avec le nombre et la position des rubans, de sorte que chacun de ces éléments comporte, une fois séparé, un dispositif détectable tel qu'étiquette électronique, antenne ou tronçon de filament.

Pour la production de moyens de surbouchage du genre "coiffe", équipés chacun d'un dispositif détectable, il est cependant préférable de dérouler et déposer, sur le matériau en bande en défilement, un unique filament continu, ou un unique ruban continu qui supporte à intervalles réguliers des dispositifs détectables séparés tels qu'étiquettes électroniques, antennes ou tronçons de filament, et on tronçonne le matériau en bande selon des lignes transversales, de préférence légèrement arrondies, de manière à séparer des éléments comportant chacun un tronçon de filament, une étiquette électronique ou une antenne, chaque élément ainsi isolé étant ensuite enroulé sur lui-même en vue de constituer la partie en forme de manchon d'un moyen de surbouchage du genre "coiffe", qui sera ainsi pourvu d'un dispositif détectable, notamment un dispositif antivol, par exemple sous forme de filament disposé le long d'une génératrice.

Suivant un autre mode de mise en oeuvre du procédé, objet de la présente invention, on dépose successivement, sur le matériau en bande en défilement, des dispositifs détectables séparés tels qu'étiquettes électroniques, antennes ou tronçons de filament, et on découpe ensuite successivement dans ce matériau en bande, en correspondance avec les dispositifs détectables déposés, des éléments du genre opercule, comportant chacun un dispositif détectable tel qu'étiquette électronique, antenne ou tronçon de filament. Le procédé de l'invention peut ainsi être mis en oeuvre sur une presse de découpe d'opercules thermoscellables, d'un type connu, ne nécessitant qu'une adaptation limitée, un appareil du genre étiqueteuse étant utilisé ici pour poser successivement les dispositifs détectables, tels qu'étiquettes électroniques. Dans la mesure où le matériau en bande est pré-imprimé, avec des motifs correspondant aux futurs opercules, l'ensemble permet un repérage pour le positionnement des dispositifs détectables en correspondance avec les impressions du matériau en bande, donc avec les positions des opercules à découper dans ce matériau en bande. Les dispositifs détectables sont ainsi déposés en étant bien centrés sur les futures découpes, correspondant aux opercules avec dispositif antivol à obtenir.

Dans l'ensemble, le procédé objet de l'invention permet de fabriquer, selon le même principe et avec des adaptations simples, divers types de moyens de bouchage et de surbouchage équipés individuellement de moyens détectables, constituant notamment des dispositifs antivol, et/ou des dispositifs de traçabilité.

L'invention sera mieux comprise à l'aide de la description qui suit, en référence au dessin schématique annexé illustrant, à titre d'exemples, divers modes de mise en oeuvre de ce procédé de fabrication de dispositifs antivol et/ou de traçabilité associés à des moyens de bouchage et de surbouchage :
Figure 1 est une vue d'ensemble en perspective illustrant un premier mode de mise en oeuvre de l'invention, appliqué à la fabrication de joints pourvus chacun d'un filament ;
Figure 2 est une vue d'ensemble en perspective illustrant une variante du procédé de la figure 1, appliquée à la fabrication de joints pourvus chacun d'une étiquette électronique ;
Figure 3 est une vue de détail, en coupe longitudinale, relative aux procédés des figures 1 et 2 ;
Figure 4 représente un joint pourvu d'un filament, tel qu'obtenu par le procédé de la figure 1 ;
Figure 5 représente un joint pourvu d'une étiquette électronique, tel qu'obtenu par le procédé de la figure 2 ;
Figure 6 est une vue en coupe d'une capsule équipée d'un tel joint ;
Figure 7 est une vue d'ensemble en perspective illustrant un autre mode de mise en oeuvre de l'invention, appliqué à la fabrication de coiffes pourvues chacune d'un filament ;
Figure 8 est une vue d'ensemble en perspective, illustrant une variante du procédé de la figure 7, appliquée à la fabrication de coiffes pourvues chacune d'une étiquette électronique ;
Figure 9 est une vue d'ensemble en perspective, illustrant une autre variante du procédé de la figure 7, appliquée à la fabrication de coiffes pourvues d'antennes ;
Figure 10 représente en perspective une coiffe avec filament, telle qu'obtenue par le procédé de la figure 7 ;
Figure **11** est une vue en perspective similaire à figure **10,** relative à une variante de forme de la coiffe ;
Figure **12** est une vue d'ensemble en perspective, illustrant un autre mode de mise en oeuvre de l'invention, appliqué à la fabrication d'opercules thermoscellables, pourvus chacun d'un dispositif détectable sous forme d'antenne ;
Figure **13** est une vue en perspective d'un pot, à l'état ouvert, pourvu d'un tel opercule thermoscellé ;
Figure **14** est une vue en perspective illustrant l'application de l'invention à la fabrication d'opercules thermoscellables pourvus d'étiquettes électroniques ;
Figures **15, 16** et **17** représentent, de façon plus détaillée, diverses formes de dispositifs détectables auxquels s'applique la présente invention.

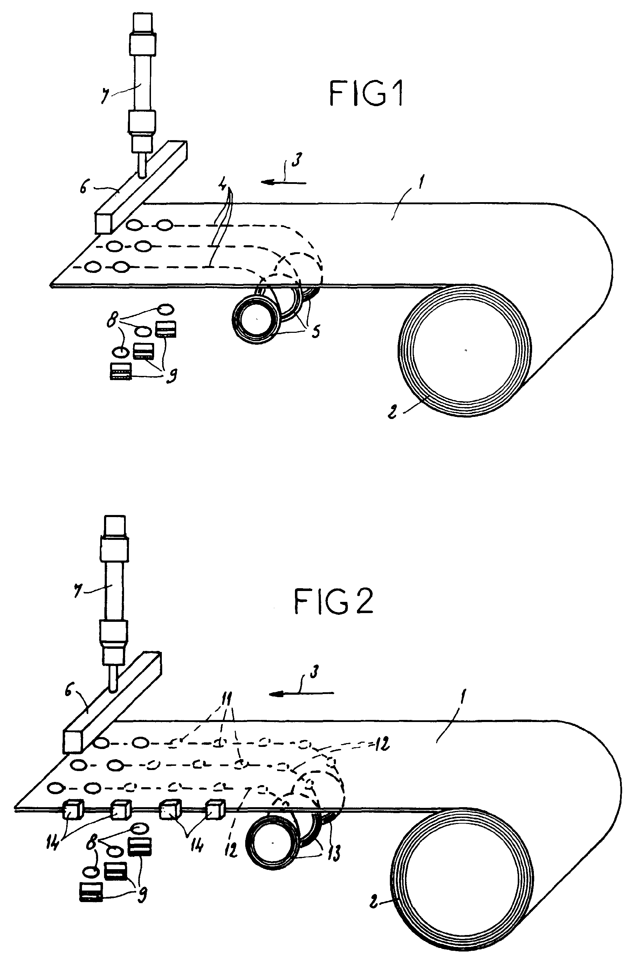

La figure **1** illustre la fabrication de joints, en forme de disque, pourvus chacun d'un dispositif détectable réalisé sous la forme d'un simple filament. Les joints sont découpés dans un matériau en bande **1** tel que notamment une matière synthétique, qui se déroule en continu d'une bobine **2**, et qui défile horizontalement suivant la flèche **3**.

Sous le matériau en bande **1**, en cours de défilement, sont déroulés de façon synchronisée plusieurs filaments métalliques continus **4**, par exemple trois filaments, qui proviennent de bobines respectives 5. Les filaments **4** sont déroulés, et déposés sur le matériau en bande **1**, suivant des lignes parallèles entre elles et au sens de défilement **3** dudit matériau en bande **1**. Chaque filament 4 est avantageusement porté par un ruban adhésif, qui vient se coller sous le matériau en bande **1**.

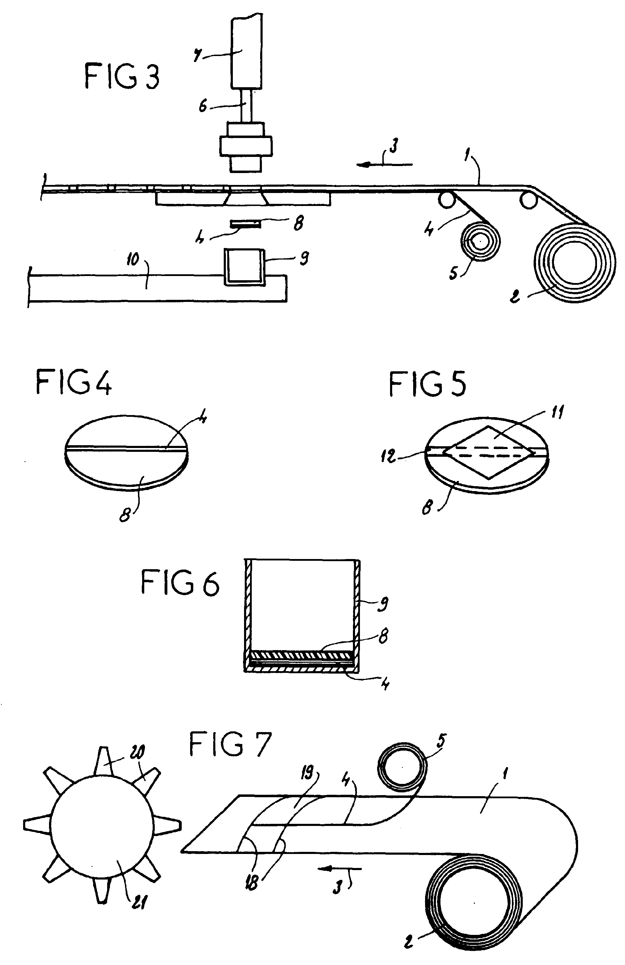

Le dispositif comprend, en aval de la zone d'application des filaments **4** sur le matériau en bande **1**, un outil **6** à poinçons multiples, s'étendant transversalement au sens de défilement **3** du matériau en bande, et actionné par un vérin **7** - voir aussi figure **3**. L'outil **6** est conçu pour découper, à chaque actionnement du vérin **7**, trois joints **8** en forme de disques, en correspondance avec les positions des trois filaments 4 déposés sur le matériau en bande **1**. Ainsi, on sépare des joints **8** qui, comme le montre la figure **4**, comportent chacun un tronçon de filament **4** disposé sur l'une de leurs faces, suivant un diamètre.

En se référant de nouveau aux figures **1** et **3**, les joints **8** ainsi découpés et pourvus de tronçons de filament **4** peuvent être immédiatement amenés à l'intérieur de capsules de bouchage **9** rigides, en métal ou en matière synthétique ou en tout autre matériau, par exemple portées par un plateau rotatif **10.** On obtient ainsi des capsules de bouchage **9** équipées chacune d'un dispositif détectable, sous forme de filament **4**, porté par le joint **8** introduit dans chacune de ces capsules **9**, et plus particulièrement un dispositif détectable dissimulé entre le joint **8** et la capsule **9** - voir aussi figure **6**.

La figure **2** illustre, à titre de variante, la fabrication de joints **8** pourvus chacun, sur l'une de leurs faces, d'une étiquette électronique **11,** comme le montre aussi la figure **5**.

Comme précédemment, la fabrication de tels joints **8** est réalisée en déroulant un matériau en bande **1**, à partir d'une bobine **2**, et en le faisant défiler horizontalement suivant la flèche **3**. Sous le matériau en bande **1** en défilement sont déroulées, et déposées, de façon synchronisée, trois lignes parallèles d'étiquettes électroniques **11,** supportées à intervalles réguliers et reliées entre elles initialement par trois rubans adhésifs **12** provenant de bobines respectives **13**.

L'outil **6** à poinçons multiples, analogue à celui des figures **1** et **3**, découpe ici encore, à chaque actionnement de son vérin **7**, trois joints **8** en correspondance avec les trois lignes d'étiquettes électroniques **12.** Des détecteurs optiques **14**, disposés sur le côté du matériau en bande **1** en cours de défilement, assurent ici le repérage des étiquettes électroniques **11** déposées sur ce matériau en bande **1**, afin de synchroniser l'actionnement de l'outil **6** avec les passages des étiquettes électroniques **11** sous les poinçons.

Comme l'illustre encore la figure **3**, les joints **8** ainsi découpés, et équipés individuellement d'une étiquette électronique **11**, peuvent être immédiatement introduits dans des capsules de bouchage **9**.

Les étiquettes électroniques **11** ici considérées sont notamment des "puces" électroniques, mais selon le même procédé on peut aussi déposer, sur le matériau en bande **1**, tous autres dispositifs détectables à caractère discontinu, tels qu'antennes ou tronçons de filament, ou encore simples impressions d'encre magnétique orientée.

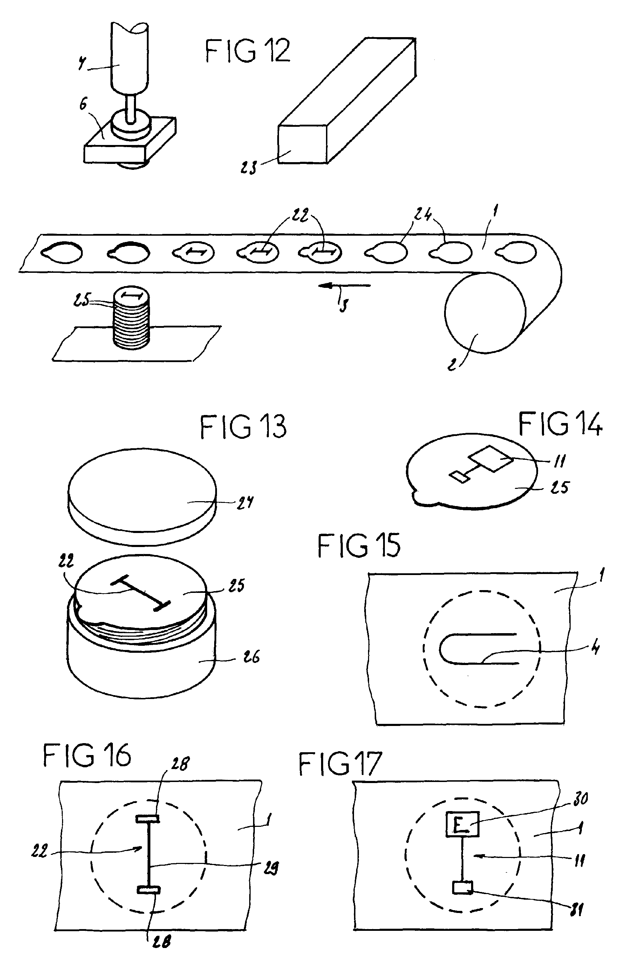

Alors que les exemples précédents se rapportent à l'équipement de moyens de bouchage, en l'occurrence des capsules **9**, avec des dispositifs détectables divers, les figures suivantes **7** à **11** concernent la fabrication de moyens de surbouchage du genre "coiffe", à équiper eux aussi d'un dispositif détectable. Une telle coiffe **15** comporte, de façon habituelle, un manchon **16** obturé, à une extrémité, par une pastille circulaire **17** - voir figure **10**.

Comme le montre la figure **7**, un matériau en bande **1** tel qu'aluminium, matière synthétique ou complexe est ici encore déroulé, à partir d'une bobine **2**, et il défile horizontalement dans le sens de la flèche **3**. Au-dessus du matériau en bande **1** en cours de défilement, est déroulé un filament métallique continu **4**, unique, provenant d'une bobine **5**. Le filament **4** est déposé sur le matériau en bande **1**, suivant une ligne parallèle au sens de défilement **3** dudit matériau en bande **1**. Le filament **4** est avantageusement porté par un ruban adhésif, qui vient se coller sur le matériau en bande **1**.

A l'aide d'une lame (non représentée), il est procédé, en aval de la zone d'application du filament **4** sur le matériau en bande **1**, à des découpes selon des lignes transversales **18,** pouvant être légèrement arrondies. Le matériau en bande **1** est ainsi tronçonné en éléments **19,** qui comportent chacun un tronçon du filament **4**, le contour d'un élément **19** correspondant à la forme développée du manchon **16** d'une coiffe **15.**

Chaque élément **19**, ainsi isolé et pré-équipé d'un tronçon de filament **4**, est amené sur un mandrin **20**, porté par un tambour rotatif **21** pourvu à sa périphérie d'une pluralité de tels mandrins **20**. Chaque mandrin **20** sert au formage, par enroulement sur un tour complet de l'élément **19** qu'elle reçoit, de la partie "manchon" **16** d'une coiffe **15**.

Après rajout de la pastille **17** à une extrémité du manchon **16,** on obtient la coiffe **15** complète, qui est pourvue d'un tronçon de filament **4**, servant de dispositif antivol, le long d'une génératrice de sa partie "manchon" **16**, à l'opposé de la zone de recouvrement

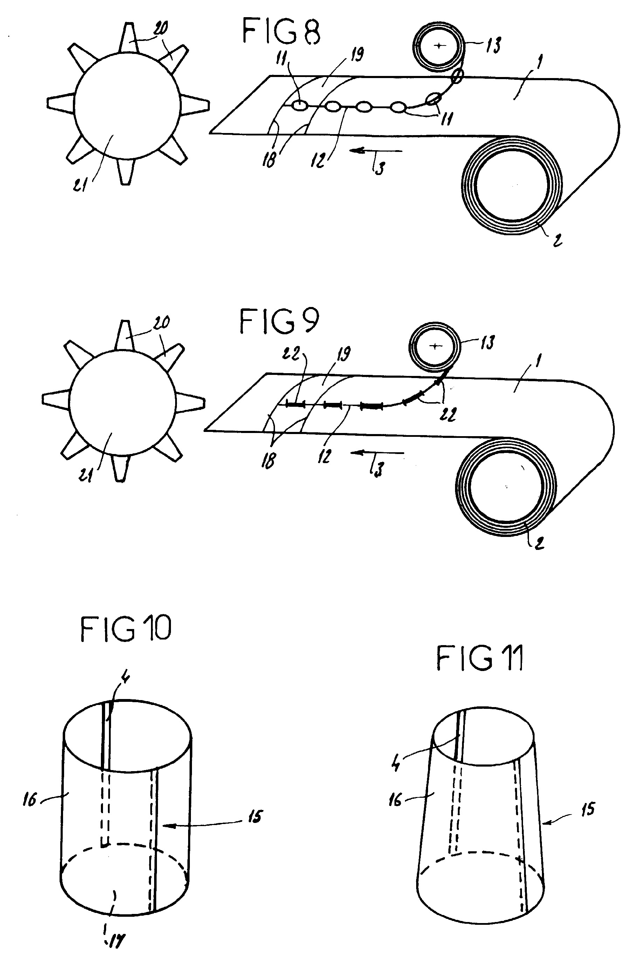

Les figures **8** et **9** illustrent deux variantes de fabrication de telles coiffes pourvues de dispositifs détectables ; les éléments correspondant à ceux de la figure **7** sont désignés par les mêmes références, et ne seront pas décrits ici une nouvelle fois.

Selon le procédé de la figure **8**, on déroule et dépose, sur le matériau en bande **1** en défilement suivant la flèche **3**, des étiquettes électroniques **11** supportées à intervalles réguliers et reliées entre elles par un ruban adhésif **12**, provenant d'une bobine **13**. Le ruban **12** est déposé et collé sur le matériau en bande **1**, suivant une ligne parallèle au sens de défilement **3** dudit matériau en bande **1**. Les découpes du matériau en bande **1** sont effectuées suivant des lignes transversales **18,** légèrement arrondies, qui passent ici entre les étiquettes électroniques **11** successives. Ainsi, le matériau en bande **1** est tronçonné en éléments **19**, qui comportent chacun une étiquette électronique **11.** Chaque élément **19,** ainsi isolé et pré-équipé d'une étiquette électronique **11,** est ici encore amené sur un mandrin **20** assurant, par enroulement de cet élément **19,** le formage de la partie "manchon" de la coiffe à fabriquer, laquelle sera pourvue de l'étiquette électronique **11** (en lieu et place du tronçon de filament **4**).

Selon le procédé de la figure **9**, on déroule et dépose, sur le matériau en bande **1** en défilement suivant la flèche **3**, des "antennes" **22** supportées à intervalles réguliers et reliées entre elles par un ruban adhésif **12**, provenant d'une bobine **13**. Pour le reste, le procédé est similaire à celui de la figure **7**, précédemment décrit, si ce n'est que les étiquettes électroniques sont remplacées par les antennes **22**, par exemple en forme de "H". On obtiendra ainsi des coiffes **15** dont la partie "manchon", résultant des éléments **19** découpés dans le matériau en bande **1**, comportera une antenne **22**, en lieu et place du tronçon de filament ou de l'étiquette électronique des exemples précédents.

Selon la forme des éléments **19** découpés dans le matériau en bande 1, on peut obtenir une coiffe **15** de forme pratiquement cylindrique (figure **10**), ou une coiffe **15** d'allure tronconique plus ou moins prononcée (figure **11**).

La figure **12** illustre la fabrication d'opercules thermoscellables, pourvus chacun d'un dispositif détectable, prenant dans l'exemple considéré la forme d'une antenne **22** en "**H**". Sur une bande de matériau thermoscellable **1** tel qu'aluminium ou complexe, se déroulant d'une bobine **2** et défilant suivant la flèche **3**, un dispositif **23** du genre étiqueteuse assure la pose, à intervalles réguliers, des antennes **22.** Le matériau en bande **1** étant pré-imprimé, avec des motifs **24** correspondant aux opercules à fabriquer, un repérage est facilement réalisé et les antennes **22** sont positionnées, par le dispositif **23,** en correspondance avec les motifs imprimés **24,** en particulier en se trouvant centrées sur ces motifs **24**. En aval de la zone de pose des antennes **22**, un outil de découpe **6** actionné par un vérin **7** effectue, sur le matériau en bande **1**, des découpes successives suivant les motifs imprimés **24.** Ainsi, ces découpes isolent des opercules thermoscellables **25**, pourvus chacun d'un dispositif détectable, ici sous la forme d'une antenne **22**. Les opercules **25** ainsi fabriqués sont empilés, éventuellement stockés, et expédiés vers un utilisateur plus ou moins éloigné, qui les mettra en place sur des récipients tels que des pots. La figure **13** montre un pot **26**, ainsi pourvu d'un opercule **25** thermoscellé, lui-même muni du dispositif détectable sous forme d'antenne **22**. Le pot **26** reçoit un bouchon vissé **27** qui, en position de fermeture, recouvre et dissimule l'opercule **25** et son antenne **22.**

La figure **14** illustre, en tant que variante des figures **12** et **13,** la possibilité de fabrication d'opercules thermoscellables **25** pourvus chacun d'un dispositif détectable réalisé sous la forme d'une étiquette électronique **11**. Comme précédemment, les étiquettes électroniques **11** sont posées sur la bande de matériau thermoscellable **1** qui défile, à l'aide d'un dispositif du genre étiqueteuse **23**, avant passage devant l'outil de découpe **6** qui sépare les opercules **25,** pourvus chacun ici d'une étiquette électronique **11.**

Enfin, les figures **15** à **17** représentent, de façon plus détaillée, la forme et/ou structure de divers dispositifs détectables auxquels peut être appliquée la présente invention, ces dispositifs pouvant être déposés sur un matériau en bande **1** dans lequel sont ensuite découpés les éléments individuels tels que joints ou opercules, précédemment décrits.

Selon la figure **15**, le dispositif détectable est un tronçon de filament **4**, courbé en "U". Selon la figure **16,** le dispositif détectable est une antenne **22**, formée de deux petits panneaux rectangulaires 28 reliés entre eux par un court filament **29.** Le filament **4** et l'antenne **22**, ainsi conformés, sont détectables par voie électromagnétique.

Selon la figure **17**, le dispositif détectable consiste en une étiquette électronique **11**, constituée par une "puce" électronique **30,** contenant des informations spécifiques (nom du fabricant du produit, lieu de production, parcours de distribution), à laquelle est reliée une antenne miniaturisée **31**. L'étiquette électronique **11,** ainsi conformée, est détectable par radiofréquence.

L'on ne s'éloignerait pas du cadre de l'invention, telle que définie par les revendications :
- dans le cas de la fabrication de joints pourvus de dispositifs détectables, en empilant et stockant ces joints pré-équipés de filaments ou d'étiquettes électroniques, et en les mettant en place seulement à un stade ultérieur dans les capsules, soit sur place, soit en un lieu éloigné ;
- dans le cas de la fabrication de coiffes de surbouchage, en plaçant le dispositif détectable non pas sur la partie "manchon" des coiffes, mais sous la pastille qui obture ces coiffes à l'une de leur extrémité ;
- dans le cas de la fabrication d'opercules thermoscellables, en posant sur ces opercules des dispositifs détectables de tout type ;
- d'une façon générale, en mettant en oeuvre le procédé avec des dispositifs détectables de tout type et de toute forme, tels que films à particules orientées, utilisables soit comme simples dispositifs antivol, soit aussi comme supports d'information ou comme dispositifs anti-falsification ;
- en appliquant le procédé à des moyens de bouchage et de surbouchage de tous genres, en tous matériaux, destinés à toutes sortes de récipients ;
- en mettant en oeuvre le procédé à l'aide de tous moyens et outillages, adaptés à chaque cas particulier, par exemple avec un pistolet de projection d'encre, dans le cas où le dispositif détectable est constitué par une impression d'encre magnétique.

## Revendications

1. Procédé de fabrication de dispositifs détectables à distance, servant notamment de dispositifs antivol mais aussi de dispositifs supports d'information, associés à des moyens de bouchage et de surbouchage de récipients, caractérisé en ce qu'il consiste à dérouler et faire défiler dans un sens prédéterminé **(3)** un matériau en bande **(1)**, à déposer sur ce matériau en bande **(1)** au moins un moyen détectable, tel que filament **(4)** ou film à particules orientées ou étiquette électronique **(11)**, sous forme continue ou discontinue, s'étendant ou se succédant dans le sens de défilement **(3)** du matériau en bande **(1)**, et à découper ledit matériau en bande **(1)** en correspondance avec le ou les moyens détectables **(4 ;11 ; 22)** déposés sur lui, de manière à séparer des éléments individuels **(8 ; 19 ; 25)** pourvus chacun d'un moyen détectable tel que filament **(4)** ou film à particules orientées ou étiquette électronique **(11),** et constituant eux-mêmes des moyens de bouchage ou de surbouchage, ou des parties **(8 ; 16)** de tels moyens **(9 ; 15).**

2. Procédé selon la revendication 1, caractérisé en ce qu'on déroule, simultanément au matériau en bande **(1)**, au moins un filament continu **(4)** qui est déposé et fixé, par exemple par collage, sur ledit matériau en bande **(1)** dans le sens de défilement **(3)** de celui-ci, et en ce qu'on découpe successivement dans ce matériau en bande **(1)** des éléments **(8)** qui, une fois séparés, comportent chacun un tronçon de filament **(4)**.

3. Procédé selon la revendication 2, caractérisé en ce qu'on déroule et dépose simultanément, sur le même matériau en bande **(1)** en défilement, deux ou plusieurs filaments continus **(4),** et en ce qu'on découpe successivement dans ce matériau en bande **(1)** des rangées transversales de deux ou plusieurs éléments **(8),** en correspondance avec le nombre et la position des filaments **(4),** de sorte que chacun de ces éléments **(8)** comporte, une fois séparé, un tronçon de filament **(4).**

4. Procédé selon la revendication 3, caractérisé en ce qu'il est prévu pour l'obtention de joints **(8)** en forme de disque pour capsules de bouchage **(9),** ces joints **(8)** étant pourvus, chacun, d'un tronçon de filament **(4)** disposé suivant un diamètre.

5. Procédé selon la revendication 1, caractérisé en ce qu'on déroule, simultanément au matériau en bande **(1)**, au moins un ruban continu **(12),** de préférence un ruban adhésif, qui supporte à intervalles réguliers des dispositifs détectables séparés tels qu'étiquettes électroniques **(11)**, antennes **(22)** ou tronçons de filament **(4)** discontinus, on dépose le ou chaque ruban **(12)** sur le matériau en bande **(1)** dans le sens de défilement **(13)** de celui-ci, et on découpe successivement dans ce matériau en bande **(1)** des éléments **(8)** qui, une fois séparés, comportent chacun un dispositif détectable tel qu'étiquette électronique **(11)**, antenne **(22)** ou tronçon de filament **(4)**.

6. Procédé selon la revendication 5, caractérisé en ce qu'on déroule ou dépose sur le matériau en bande en défilement, suivant des lignes parallèles, deux ou plusieurs rubans continus **(12)** qui supportent chacun, à intervalles réguliers, des dispositifs détectables séparés tels qu'étiquettes électroniques **(11),** antennes **(22)** ou tronçons de filament **(4),** et on découpe successivement dans ce matériau en bande **(1)** des rangées transversales de deux ou plusieurs éléments **(8),** en correspondance avec le nombre et la position des rubans **(12),** de sorte que chacun de ces éléments **(8)** comporte, une fois séparé, un dispositif détectable tel qu'étiquette électronique **(11),** antenne **(22)** ou tronçon de filament **(4).**

7. Procédé selon la revendication 1, caractérisé en ce qu'on déroule et dépose, sur le matériau en bande **(1)** en défilement, un unique filament continu **(4),** ou un unique ruban continu **(12)** qui supporte à intervalles réguliers des dispositifs détectables séparés tels qu'étiquettes électroniques **(11)**, antennes **(22)** ou tronçons de filament **(4),** et on tronçonne le matériau en bande **(1)** selon des lignes transversales **(18)**, de préférence légèrement arrondies, de manière à séparer des éléments **(19)** comportant chacun un tronçon de filament **(4),** une étiquette électronique **(11)** ou une antenne **(22)**, chaque élément **(10)** ainsi isolé étant ensuite enroulé sur lui-même en vue de constituer la partie en forme de manchon **(16)** d'un moyen de surbouchage du genre "coiffe" **(15)**, qui sera ainsi pourvue d'un dispositif détectable, notamment un dispositif antivol, par exemple sous forme de filament **(4)** disposé le long d'une génératrice.

8. Procédé selon la revendication 1, caractérisé en ce qu'on dépose successivement, sur le matériau en bande **(1)** en défilement, des dispositifs détectables séparés tels qu'étiquettes électroniques **(11),** antennes **(22)** ou tronçons de filament **(4),** et on découpe ensuite successivement dans ce matériau en bande **(1),** en correspondance avec les dispositifs détectables déposés, des éléments du genre opercule **(25),** comportant chacun un dispositif détectable tel qu'étiquette électronique **(11)**, antenne **(22)** ou tronçon de filament **(4).**

9. Procédé selon la revendication 8, caractérisé en ce que le matériau en bande **(1)** est pré-imprimé, avec des motifs **(24)** correspondant aux futurs opercules **(25)**, et en ce que les dispositifs détectables **(4,11,22)** sont positionnés en correspondance avec les impressions du matériau en bande **(1),** donc avec les positions des opercules **(25)** à découper dans ce matériau en bande **(1).**
